# EUROPEAN PATENT SPECIFICATION

(11) **EP 3 422 501 B1**
(45) Date of publication and mention of the grant of the patent: **28.04.2021**
(21) Application number: 17209473.2
(22) Date of filing: 21.12.2017
(51) Int. Cl.: H02B 3/00, H02B 7/00

(54) **ROBOT FOR UNMANNED OPERATION AND MAINTENANCE IN AN INDOOR MEDIUM OR HIGH VOLTAGE SWITCHGEAR STATION**
ROBOT FÜR UNBEMANNTEN BETRIEB UND WARTUNG IN EINEM MITTEL- ODER HOCHSPANNUNGSGEHÄUSE
ROBOT À FONCTIONNEMENT ET MAINTENANCE SANS PERSONNEL DANS UN STATION À MOYENNE OU HAUTE TENSION

(30) Priority: 28.06.2017 EP 17178336
(43) Date of publication of application: 02.01.2019
(73) Proprietor: ABB Schweiz AG, 5400 Baden (CH)
(72) Inventor: Kozel, Tomas, 635 00 Brno (CZ); Schmidtchen, Thomas, Houston, Texas, 70056 (US); Stefanka, Martin, 664 61 Rajhrad (CZ)
(74) Representative: Maiwald Patent- und Rechtsanwaltsgesellschaft mbH

(56) References cited:
- US-A1- 2013 231 779
- US-A1- 2017 085 064
- JEAN-FRANCOIS ALLAN ET AL: "Robotic systems applied to power substations - A state-of-the-art survey", PROCEEDINGS OF THE 2014 3RD INTERNATIONAL CONFERENCE ON APPLIED ROBOTICS FOR THE POWER INDUSTRY, 1 January 2014 (2014-01-01), pages 1-6, XP055471456, DOI: 10.1109/CARPI.2014.7030049

## Description

The invention relates to a switch- or controlgear system for medium or high voltage use, with an external housing with unmanned operation and maintenance, and a method of operating the same.

### Background

Normally, well known switchgears or controlgears are provided with sensors, in order to have control elements and sensors, connected via local data networks or via browsers, for technical diagnostic and stearing functions and or maintenance by that.

US2013/231779A1 describes a mobile inspection robot that includes a robot body and a drive system supporting the robot body and configured to maneuver the robot over a work surface. A controller communicates with the drive system and a sensor system. The controller executes a control system that includes a control arbitration system and a behavior system in communication with each other. The behavior system executes an inspection behavior, the inspection behavior influencing execution of commands by the control arbitration system based on sensor signals received from the sensor system to identify and inspect electrical equipment

EP3010101 A1 discloses a switchgear with a portable probe system that can be guided through an opening in the housing of the switchgear into the medium voltage compartment.

The scope of the inspection in switchgear or controlgear with unmanned operation can be enhanced compared to the scope that is typically done by fixed sensors or manually on de-energized switchgear or controlgear today. By enhancing the inspection scope periodic shutdown and testing of the switchgear or controlgear and its components can be avoided.

Systems like that, only can send sensor data for technical diagnosis, but maintenance of actual technical problems cannot be activated.

### Object of the invention

So the object of the invention is, to enhance such switchgear or controlgear systems, that a more detailed sensoring of technical faults is given, so that faults or deterioration of components that might lead to faults, and malfunctions can be located much more detailed and quickly, and at least first steps, over solving technical problems can be initiated automatically.

### Invention

Considering that, a switchgear or controlgear with unmanned operation and maintenance excludes human operators from operation and maintenance processes of the switchgear or controlgear as we know them today.

So starting with the a.m. object, and referring to a switchgear or controlgear for medium or high voltage use, the solution is given by the invention, given by the features of claim 1.

Further advantageous embodiments are given by the depending claims.

Referring to a switch- or controlgear system, the invention is, that the switchgear or controlgear system is provided for unmanned operation and maintenance with a robotic system or manipulator, and that the robotic system or manipulator is provided with a camera system, and an image recognition system.

By adding a robotic system to inner space of the switchgear or controlgear, a new system serving the operation and maintenance functions of the switchgear or controlgear was introduced. The robotic system and design of the switchgear or controlgear internal space without segregations gives opportunity to collect much richer static and dynamic visual data about the primary and auxiliary circuits and mechanisms condition compared to today situation.

Collected rich visual data allow the application of automatized image processing and analysis with the target to learn the conditions of the switchgear or controlgear systems and components.

Furthermore, by the use of the invention, the switchgear or controlgear systems can react in cases of faults much quicker, and more effectively.

A further advantageous example is, that the robot system is provided with a data network or an external data communication interface.

In a further advantageous example the camera has means for corresponding with a image recognition system, and to evaluate actual images with adaptive image data, in order to be able to locate and to analyse physical reasons for faults, or deterioration of components, that might lead to faults.

In a further advantageous example, the camera is provided with a video mode, by which the functional sureveillance can be taken by slow motion video sequences.

In a further advantageous example of the invention, the robot system is provided with a data network or external data communication interface, and that in case of detection of technical problems or malfunctions, referring messages are generated automatically and sent to an authorized external observation system.

Furthermore advantageous is an example in which the camera is provided with means for corresponding with an image recognition system, and to evaluate actual images with adaptive image data, in order to be able to locate and to analyse physical reasons for faults or deterioration of components that might lead to faults.

In a last advantageous example, the camera is provided with a video mode by which the functional surveillance can be taken by slow motion video sequences, and analysed automatically with regular expected function sequences by comparison of slow motion video sequences from a adaptive data field, which show the expected regular function.

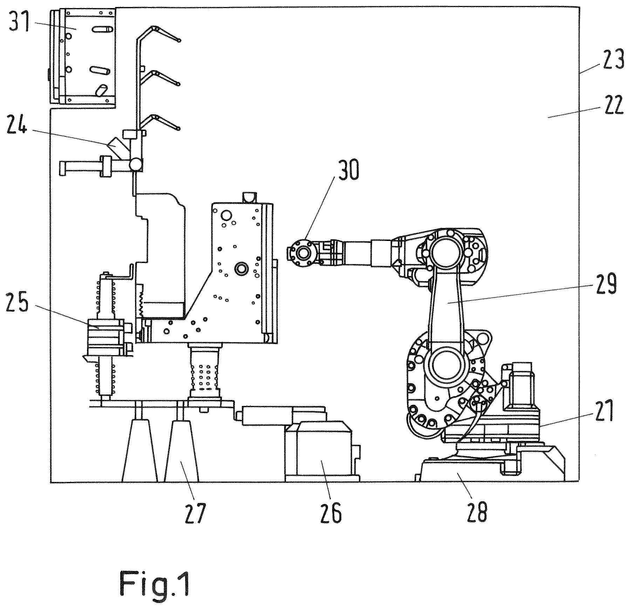

An advantageous embodiment of the invention is shown in figure 1.
Fig.1 Example crossection of switchgear or controlgear with unmanned operation and maintenance

This invention disclosure describes the enhanced scope of robotized inspection of the switchgear or controlgear with unmanned operation and maintenance. The robotic system 21 tooling includes in this embodiment sensors for visual inspection and thermographic inspection for the enhanced inspection of energized switchgear or controlgear. As the robotic manipulator 29 and wrist 30 is allowed to approach de-energized circuits only, all these sensors shall be non-contact type. The robotic arm and wrist can position the sensors to best shot positions without advanced pan, tilt, zoom functions on the sensors itself.

The visual inspection sensor in this embodiment is be capable of taking high resolution picture as well as slow-motion video sequence recording. The data from visual inspection sensor and subsequent automatic image analysis algorithms shall be used for following inspection tasks:
- Detecting grime, corrosion, moisture on the primary circuits from high resolution static images
- Detecting traces of discharges or ruptures on the insulation surfaces from high resolution static images
- Detecting irregularities in movement of auxiliary mechanism during operation by slow-motion video sequence analysis
- Detecting irregularities in movement of switching device moving contact by slow-motion video sequence analysis

The sensors for thermographic inspection shall be capable of taking high resolution thermographic pictures of high emissivity surfaces. The primary circuits inside the switchgear or controlgear shall be preferably covered with thin high emissivity material wherever possible to allow accurate thermographic measurements.

The data from thermographic inspection sensor and subsequent automatic image analysis algorithms shall be used for following inspection tasks:
- Detecting hot spots on primary circuits from static thermographic images
- Detecting spots hotter than maximum allowed temperature on the primary circuits from static thermographic images
- Detecting hot spots on the auxiliary circuits from static thermography images
- Detecting points of high friction on the auxiliary mechanisms from static thermography images

## Claims

1. A medium voltage or high voltage switchgear or control gear, comprising:
- a unmanned robotic system (21);
- a housing;
- primary circuits;
- primary mechanisms;
- a switching device with a moving contact;
- auxiliary circuits; and
- auxiliary mechanisms;
wherein the robotic system is located within the housing;
wherein, the primary circuits, primary mechanisms, switching device with a moving contact; auxiliary circuits, and auxiliary mechanisms are located within the housing;
wherein, the robotic system comprises:
- a robotic arm (29) with a wrist (30);
- a camera system; and
- an image recognition system;
wherein, the camera system is attached to the robotic arm with a wrist; wherein, the robotic arm with a wrist is configured to position the camera system at a plurality of locations within the inner space of the medium voltage or high voltage switchgear or control gear;
wherein, at the plurality of locations the camera system is configured to acquire imagery of the primary circuits, primary mechanisms, switching device with a moving contact, auxiliary circuits, and auxiliary mechanisms; and wherein the imagery is visual imagery acquired with a visual inspection sensor of the camera system and thermographic imagery acquired with a
thermographic inspection sensor of the camera system; and
wherein, the image recognition system is configured to implement at least one image analysis algorithm to analyse imagery to determine a condition of one or more of the primary circuits, primary mechanisms, switching device with a moving contact, auxiliary circuits, and auxiliary mechanisms.

2. Medium voltage or high voltage switchgear or control gear according to claim 1, wherein the imagery comprises the visual imagery, wherein the visual imagery comprises one or more high resolution static images, and wherein the determined condition of the primary circuits comprises a detection of one or more of: grime, corrosion, moisture on a primary circuit from an analysis of the one or more high resolution static images.

3. Medium voltage or high voltage switchgear or control gear according to any of claims 1-2, wherein one or more of the primary circuits, primary mechanisms, switching device with the moving contact, auxiliary circuits, and auxiliary mechanisms comprises insulation; wherein the imagery comprises the visual imagery, wherein the visual imagery comprises one or more high resolution static images, and wherein the determined condition of the primary circuits, primary mechanisms, switching device with a moving contact, auxiliary circuits, and auxiliary mechanisms comprises a detection of one or more discharges or ruptures on an insulation surface from an analysis of the one or more high resolution static images.

4. Medium voltage or high voltage switchgear or control gear according to any of claims 1-3, wherein the imagery comprises the visual imagery, wherein the visual imagery comprises one or more slow-motion video sequences, and wherein the determined condition of the auxiliary mechanisms comprises a detection of an irregularity in movement of an auxiliary mechanism from an analysis of the one or more slow-motion video sequences.

5. Medium voltage or high voltage switchgear or control gear according to any of claims 1-4, wherein the imagery comprises the visual imagery, and wherein the visual imagery comprises one or more slow-motion video sequences, and wherein the determined condition of the switching device with the moving contact comprises a detection of an irregularity in movement of the moving contact from an analysis of the one or more slow-motion video sequences.

6. Medium voltage or high voltage switchgear or control gear according to any of claims 1-5, wherein the imagery comprises the thermographic imagery, wherein the thermographic imagery comprises one or more high resolution static thermographic images, and wherein the determined condition of the primary circuits comprises a detection of a hot spot on a primary circuit from an analysis of the one or more high resolution static thermographic images.

7. Medium voltage or high voltage switchgear or control gear according to claim 6, wherein the image recognition system is configured to determine that a spot is a hot spot when a detected temperature of the spot is greater than an allowed maximum temperature.

8. Medium voltage or high voltage switchgear or control gear according to any of claims 6-7, wherein at least some parts of the primary circuits are covered with a thin high emissivity material.

9. Medium voltage or high voltage switchgear or control gear according to any of claims 1-8, wherein the imagery comprises the thermographic imagery, wherein the thermographic imagery comprises one or more high resolution static thermographic images, and wherein the determined condition of the auxiliary circuits comprises a detection of a hot spot on an auxiliary circuit from an analysis of the one or more high resolution static thermographic images.

10. Medium voltage or high voltage switchgear or control gear according to any of claims 1-9, wherein the imagery comprises the thermographic imagery, wherein the thermographic imagery comprises one or more high resolution static thermographic images, and wherein the determined condition of the auxiliary mechanisms comprises a detection of a point of high friction on an auxiliary mechanism from an analysis of the one or more high resolution static thermographic images.

11. Medium voltage or high voltage switchgear or control gear according to any of claims 1-9, wherein the robotic system is configured to determine a location associated with the determined condition of the primary circuits and mechanisms, switching device with a moving contact, and auxiliary circuits and mechanisms.

## Patentansprüche

1. Eine Mittel- oder Hochspannungsschaltanlage oder ein Schaltgerät, bestehend aus:
- ein unbemanntes Robotersystem (21);
- ein Gehäuse;
- Primärkreise;
- Primärmechanismen;
- Schaltgerät mit einem beweglichen Kontakt;
- Hilfsstromkreise; und
- Hilfsmechanismen;
wobei sich das Robotersystem innerhalb des Gehäuses befindet;
wobei die primären Schaltkreise, die primären Mechanismen, die Schaltvorrichtung mit einem beweglichen Kontakt, die Hilfsschaltkreise und die Hilfsmechanismen innerhalb des Gehäuses angeordnet sind;
wobei das Robotersystem umfasst:
- ein Roboterarm (29) mit einem Handgelenk (30);
- ein Kamerasystem; und
- ein Bilderkennungssystem;
wobei das Kamerasystem mit einem Handgelenk an dem Roboterarm befestigt ist;
wobei der Roboterarm mit Handgelenk so konfiguriert ist, dass er das Kamerasystem an einer Vielzahl von Stellen im Innenraum der Mittelspannungs- oder Hochspannungsschaltanlage positioniert;
wobei das Kamerasystem so konfiguriert ist, dass es an den mehreren Orten Bilder der primären Schaltkreise, der primären Mechanismen, der Schaltvorrichtung mit einem beweglichen Kontakt, der Hilfsschaltkreise und der Hilfsmechanismen erfasst; und wobei die Bilder visuelle Bilder sind, die mit einem visuellen Inspektionssensor des Kamerasystems erfasst werden, und thermographische Bilder, die mit einem thermographischen Inspektionssensor des Kamerasystems erfasst werden; und
wobei das Bilderkennungssystem so konfiguriert ist, dass es mindestens einen Bildanalysealgorithmus implementiert, um Bilder zu analysieren, um einen Zustand von einem oder mehreren der primären Schaltkreise, primären Mechanismen, Schaltvorrichtung mit einem beweglichen Kontakt, Hilfsschaltkreise und Hilfsmechanismen zu bestimmen.

2. Mittelspannungs- oder Hochspannungsschaltanlage oder -steuergerät nach Anspruch 1, wobei das Bildmaterial das visuelle Bildmaterial umfasst, wobei das visuelle Bildmaterial ein oder mehrere hochauflösende statische Bilder umfasst, und wobei der ermittelte Zustand der Primärkreise eine Erkennung von einem oder mehreren der folgenden Merkmale umfasst: Verschmutzung, Korrosion, Feuchtigkeit auf einem Primärkreis aus einer Analyse des einen oder der mehreren hochauflösenden statischen Bilder.

3. Mittelspannungs- oder Hochspannungsschaltanlage oder -steuergerät nach einem der Ansprüche 1 bis 2, wobei einer oder mehrere der Primärstromkreise, der Primärmechanismen, der Schaltvorrichtung mit dem beweglichen Kontakt, der Hilfsstromkreise und der Hilfsmechanismen eine Isolierung umfassen; wobei das Bildmaterial das visuelle Bildmaterial umfasst, wobei das visuelle Bildmaterial ein oder mehrere hochauflösende statische Bilder umfasst, und wobei der ermittelte Zustand der Primärstromkreise, der Primärmechanismen, der Schaltvorrichtung mit dem beweglichen Kontakt, der Hilfsstromkreise und der Hilfsmechanismen eine Erkennung von einer oder mehreren Entladungen oder Rissen auf einer Isolationsoberfläche aus einer Analyse des einen oder der mehreren hochauflösenden statischen Bilder umfasst.

4. Mittelspannungs- oder Hochspannungsschaltanlage oder -steuergerät nach einem der Ansprüche 1 bis 3, wobei das Bildmaterial das visuelle Bildmaterial umfasst, wobei das visuelle Bildmaterial eine oder mehrere Zeitlupen-Videosequenzen umfasst, und wobei der ermittelte Zustand der Hilfsmechanismen eine Erkennung einer Unregelmäßigkeit in der Bewegung eines Hilfsmechanismus aus einer Analyse der einen oder mehreren Zeitlupen-Videosequenzen umfasst.

5. Mittelspannungs- oder Hochspannungsschaltgerät nach einem der Ansprüche 1-4, wobei das Bildmaterial das visuelle Bildmaterial umfasst, und wobei das visuelle Bildmaterial eine oder mehrere Zeitlupen-Videosequenzen umfasst, und wobei der ermittelte Zustand des Schaltgeräts mit dem beweglichen Kontakt eine Erkennung einer Unregelmäßigkeit in der Bewegung des beweglichen Kontakts aus einer Analyse der einen oder mehreren Zeitlupen-Videosequenzen umfasst.

6. Mittelspannungs- oder Hochspannungsschaltanlage oder -steuergerät nach einem der Ansprüche 1-5, wobei die Bilder die thermografischen Bilder umfassen, wobei die thermografischen Bilder ein oder mehrere hochauflösende statische thermografische Bilder umfassen, und wobei der ermittelte Zustand der Primärstromkreise eine Erkennung eines Hot Spots auf einem Primärstromkreis aus einer Analyse der ein oder mehreren hochauflösenden statischen thermografischen Bilder umfasst.

7. Mittelspannungs- oder Hochspannungsschaltgerät nach Anspruch 6, wobei das Bilderkennungssystem so konfiguriert ist, dass es feststellt, dass eine Stelle eine heiße Stelle ist, wenn eine erfasste Temperatur der Stelle größer als eine zulässige Maximaltemperatur ist.

8. Mittel- oder Hochspannungsschaltgeräte nach einem der Ansprüche 6-7, wobei zumindest einige Teile der Primärkreise mit einem dünnen Material mit hohem Emissionsgrad bedeckt sind.

9. Mittelspannungs- oder Hochspannungsschaltanlage oder -steuergerät nach einem der Ansprüche 1-8, wobei die Bilder die thermografischen Bilder umfassen, wobei die thermografischen Bilder ein oder mehrere hochauflösende statische thermografische Bilder umfassen, und wobei der ermittelte Zustand der Hilfsstromkreise eine Erkennung eines Hot Spots auf einem Hilfsstromkreis aus einer Analyse der ein oder mehreren hochauflösenden statischen thermografischen Bilder umfasst.

10. Mittelspannungs- oder Hochspannungsschaltanlage oder -steuergerät nach einem der Ansprüche 1-9, wobei die Bilder die thermografischen Bilder umfassen, wobei die thermografischen Bilder ein oder mehrere hochauflösende statische thermografische Bilder umfassen, und wobei der ermittelte Zustand der Hilfsmechanismen eine Erkennung eines Punktes hoher Reibung an einem Hilfsmechanismus aus einer Analyse des einen oder der mehreren hochauflösenden statischen thermografischen Bilder umfasst.

11. Mittelspannungs- oder Hochspannungsschaltanlage oder -steuergerät nach einem der Ansprüche 1-9, wobei das Robotersystem so konfiguriert ist, dass es einen Ort bestimmt, der mit dem ermittelten Zustand der Primärstromkreise und -mechanismen, der Schaltvorrichtung mit beweglichem Kontakt und der Hilfsstromkreise und -mechanismen verbunden ist.

## Revendications

1. Appareillage de commutation ou appareillage de commande moyenne tension ou haute tension, comprenant :
- un système robotique sans personnel (21) ;
- un carter ;
- des circuits principaux ;
- des mécanismes principaux ;
- un dispositif de commutation pourvu d'un contact mobile ;
- des circuits auxiliaires ; et
- des mécanismes auxiliaires ;
le système robotique étant situé à l'intérieur du carter ;
les circuits principaux, les mécanismes principaux, le dispositif de commutation pourvu d'un contact mobile, les circuits auxiliaires et les mécanismes auxiliaires étant situés à l'intérieur du carter ;
le système robotique comprenant :
- un bras robotique (29) pourvu d'un poignet (30) ;
- un système de caméra ; et
- un système de reconnaissance d'images ;
le système de caméra étant attaché au bras robotique pourvu d'un poignet ;
le bras robotique pourvu d'un poignet étant configuré pour positionner le système de caméra à une pluralité d'emplacements dans l'espace intérieur de l'appareillage de commutation ou de l'appareillage de commande moyenne tension ou haute tension ;
à la pluralité d'emplacements, le système de caméra étant configuré pour acquérir une imagerie des circuits principaux, des mécanismes principaux, du dispositif de commutation pourvu d'un contact mobile, des circuits auxiliaires et des mécanismes auxiliaires ; et l'imagerie consistant en une imagerie visuelle acquise au moyen d'un capteur d'inspection visuelle du système de caméra et une imagerie thermographique acquise au moyen d'un capteur d'inspection thermographique du système de caméra ; et
le système de reconnaissance d'images étant configuré pour appliquer au moins un algorithme d'analyse d'images afin d'analyser l'imagerie pour déterminer un état des circuits principaux et/ou des mécanismes principaux et/ou du dispositif de commutation pourvu d'un contact mobile et/ou des circuits auxiliaires et/ou des mécanismes auxiliaires.

2. Appareillage de commutation ou appareillage de commande moyenne tension ou haute tension selon la revendication 1, dans lequel l'imagerie comprend l'imagerie visuelle, dans lequel l'image visuelle comprend une ou plusieurs images statiques à haute résolution, et dans lequel l'état déterminé des circuits principaux comprend : un encrassement et/ou une corrosion et/ou une humidité sur un circuit principal à partir d'une analyse des une ou plusieurs images statiques à haute résolution.

3. Appareillage de commutation ou appareillage de commande moyenne tension ou haute tension selon l'une quelconque des revendications 1 et 2, dans lequel les circuits principaux et/ou les mécanismes principaux et/ou le dispositif de commutation pourvu du contact mobile et/ou les circuits auxiliaires et/ou les mécanismes auxiliaires comprennent une isolation ; dans lequel l'imagerie comprend l'imagerie visuelle, dans lequel l'image visuelle comprend une ou plusieurs images statiques à haute résolution, et dans lequel l'état déterminé des circuits principaux, des mécanismes principaux, du dispositif de commutation pourvu d'un contact mobile, des circuits auxiliaires et des mécanismes auxiliaires comprend une détection d'une ou de plusieurs décharges ou ruptures sur une surface d'isolation à partir d'une analyse des une ou plusieurs images statiques à haute résolution.

4. Appareillage de commutation ou appareillage de commande moyenne tension ou haute tension selon l'une quelconque des revendications 1 à 3, dans lequel l'imagerie comprend l'imagerie visuelle, dans lequel l'imagerie visuelle comprend une ou plusieurs séquences vidéo au ralenti, et dans lequel l'état déterminé des mécanismes auxiliaires comprend une détection d'une irrégularité de mouvement d'un mécanisme auxiliaire à partir d'une analyse des une ou plusieurs séquences vidéo au ralenti.

5. Appareillage de commutation ou appareillage de commande moyenne tension ou haute tension selon l'une quelconque des revendications 1 à 4, dans lequel l'imagerie comprend l'imagerie visuelle, et dans lequel l'imagerie visuelle comprend une ou plusieurs séquences vidéo au ralenti, et dans lequel l'état déterminé du dispositif de commutation pourvu du contact mobile comprend une détection d'une irrégularité de mouvement du contact mobile à partir d'une analyse des une ou plusieurs séquences vidéo au ralenti.

6. Appareillage de commutation ou appareillage de commande moyenne tension ou haute tension selon l'une quelconque des revendications 1 à 5, dans lequel l'imagerie comprend l'imagerie thermographique, dans lequel l'imagerie thermographique comprend une ou plusieurs images thermographiques statiques à haute résolution, et dans lequel l'état déterminé des circuits principaux comprend une détection d'un point chaud sur un circuit principal à partir d'une analyse des une ou plusieurs images thermographiques statiques à haute résolution.

7. Appareillage de commutation ou appareillage de commande moyenne tension ou haute tension selon la revendication 6, dans lequel le système de reconnaissance d'images est configuré pour déterminer qu'un point est un point chaud lorsqu'une température détectée du point est supérieure à une température maximale admise.

8. Appareillage de commutation ou appareillage de commande moyenne tension ou haute tension selon l'une quelconque des revendications 6 et 7, dans lequel au moins certaines parties des circuits principaux sont recouvertes d'un matériau mince à forte émissivité.

9. Appareillage de commutation ou appareillage de commande moyenne tension ou haute tension selon l'une quelconque des revendications 1 à 8, dans lequel l'imagerie comprend l'imagerie thermographique, dans lequel l'imagerie thermographique comprend une ou plusieurs images thermographiques statiques à haute résolution, et dans lequel l'état déterminé des circuits auxiliaires comprend une détection d'un point chaud sur un circuit auxiliaire à partir d'une analyse des une ou plusieurs images thermographiques statiques à haute résolution.

10. Appareillage de commutation ou appareillage de commande moyenne tension ou haute tension selon l'une quelconque des revendications 1 à 9, dans lequel l'imagerie comprend l'imagerie thermographique, dans lequel l'imagerie thermographique comprend une ou plusieurs images thermographiques statiques à haute résolution, et dans lequel l'état déterminé des mécanismes auxiliaires comprend une détection d'un point de fort frottement sur un mécanisme auxiliaire à partir d'une analyse des une ou plusieurs images thermographiques statiques à haute résolution.

11. Appareillage de commutation ou appareillage de commande moyenne tension ou haute tension selon l'une quelconque des revendications 1 à 9, dans lequel le système robotique est configuré pour déterminer un emplacement associé à l'état déterminé des circuits et mécanismes principaux, du dispositif de commutation pourvu d'un contact mobile et des circuits et mécanismes auxiliaires.
